# EUROPEAN PATENT APPLICATION

(11) **EP 2 405 349 A1**
(43) Date of publication of application: **11.01.2012**
(21) Application number: 11167204.4
(22) Date of filing: 24.05.2011
(51) Int. Cl.: G06F 3/14, G06F 3/00, G06K 9/00, G06F 3/03, G06T 17/00

(54) **Apparatus and method for providing augmented reality through generation of a virtual marker**

(30) Priority: 09.07.2010 KR 20100066564
(71) Applicant: Pantech Co., Ltd., Seoul 121-270 (KR)
(72) Inventor: Lim, Song, 121-270, Seoul (KR); Ko, Jung Suk, 121-270, Seoul (KR)
(74) Representative: Jordan, Volker Otto Wilhelm

(57) **Abstract**

An apparatus to provide augmented reality (AR), includes a relevant information acquisition unit to acquire relevant information corresponding to an object to implement AR, a relevant information editing unit to edit the of acquired relevant information, and a virtual marker generating unit to generate a virtual marker based on the edited relevant information by mapping the edited relevant information to a marker element, which is defmed based on a number, a symbol, an icon, a color or a combination of the number, symbol, icon and color. A method for providing AR includes acquiring relevant information corresponding to an object recognized in an image, editing the relevant information, and generating the a virtual marker based on the edited relevant information.

## Description

### CROSS-REFERENCE TO RELATED APPLICATION

This application claims priority from and the benefit under 35 U.S.C. §119(a) of Korean Patent Application No. 10-2010-0066564, filed on July 9, 2010, which is incorporated by reference for all purposes as if fully set forth herein.

### BACKGROUND

FIELD

The following description relates to technology to process augmented reality (AR) data and images for implementation in AR.

DISCUSSION OF THE BACKGROUND

Augmented reality (AR) is a computer graphic scheme allowing a virtual object or information to be viewed as if the virtual object or information were in a real world environment by combining the virtual object or information with the real world environment.

Unlike conventional virtual reality, which has only a virtual space and a virtual object, AR further provides additional information that may not be easily obtained in the real world by overlaying a virtual object onto the real world. That is, unlike virtual reality, which may be applicable to limited fields such as computer games, AR is applicable to various real world environments and has been spotlighted as a next generation display technology desirable in a ubiquitous environment.

In order to implement AR, an object may be recognized through a marker-based scheme or a markerless-based scheme. However, the types of information contained within a marker may be difficult to see without viewing all of the information that may be produced in relation to the entire marker. Accordingly, a user has to view unwanted information to identify the sought information.

### SUMMARY

Exemplary embodiments of the present invention provide an apparatus and a method for providing augmented reality through the generation of a virtual marker.

Additional features of the invention will be set forth in the description which follows, and in part will be apparent from the description, or may be learned by practice of the invention.

Exemplary embodiments of the present invention provide an apparatus to provide augmented reality (AR) including a relevant information acquisition unit to acquire relevant information corresponding to an object recognized in an image, a relevant information editing unit to edit the relevant information, and a virtual marker generating unit to generate a virtual marker based on the edited relevant information by mapping the edited relevant information to a marker element which is defined based on at least one of a number, a symbol, an icon, and a color.

Exemplary embodiments of the present invention provide a method of providing augmented reality (AR) including acquiring relevant information corresponding to an object recognized in an image, editing the relevant information, and generating a virtual marker based on the edited relevant information by mapping the edited relevant information to a marker element, which is defined based on at least one of a number, a symbol, an icon, and a color.

Exemplary embodiments of the present invention provide an apparatus for providing augmented reality (AR) including an image acquisition unit to obtain an image including an object of interest, an object recognition unit to recognize the object of interest from the image, a relevant information acquisition unit to acquire a first piece and a second piece of relevant information corresponding to the object of interest, a relevant information editing unit to edit the first piece and the second piece of acquired relevant information, a virtual marker generating unit to generate a virtual marker based on the edited relevant information, a display control unit to select the virtual markers selected for viewing by a user, and to exclude the virtual markers not selected for viewing, and a display unit to display to display the virtual markers selected for viewing.

It is to be understood that both foregoing general descriptions and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram illustrating an apparatus to provide augmented reality (AR) according to an exemplary embodiment of the invention.

FIG. 2 is a diagram illustrating collected relevant information as well as the editing thereof where an object is recognized through a marker-based scheme according to an exemplary embodiment of the invention.

FIG. 3 is a diagram illustrating a set of collected relevant information as well as the editing thereof where a plurality of objects are recognized through a markerless-based scheme according to an exemplary embodiment of the invention.

FIG. 4 is a diagram illustrating a virtual marker according to an exemplary embodiment of the invention.

FIG. 5 is a diagram illustrating a method for providing AR according to an exemplary embodiment of the invention.

FIGS. 6A, 6B and 6C are diagrams illustrating a method for displaying a virtual marker according to an exemplary embodiment of the invention.

FIG. 7 is a diagram illustrating a method for editing a virtual marker according to an exemplary embodiment of the invention.

FIG. 8A and FIG. 8B are diagrams illustrating a method or displaying relevant information based on a virtual marker according to an exemplary embodiment of the invention.

FIG. 9 is a diagram illustrating a method for editing a virtual marker according to an exemplary embodiment of the invention.

FIG. 10A, FIG. 10B, and FIG. 10C are diagrams illustrating a method for displaying relevant information based on a virtual marker according to an exemplary embodiment of the invention.

FIG. 11 is a diagram illustrating an AR book to which a virtual marker is applied according to an exemplary embodiment of the invention.

FIG. 12 is a diagram illustrating activation of a virtual marker according to an exemplary embodiment of the invention.

FIG. 13 is a diagram illustrating a method for editing a virtual marker according to an exemplary embodiment of the invention.

FIG. 14 is a diagram illustrating a method for displaying a virtual marker according to an exemplary embodiment of the invention.

FIG. 15 is a diagram illustrating a method for storing and managing a virtual marker according to an exemplary embodiment of the invention.

### DETAILED DESCRIPTION OF THE ILLUSTRATED EMBODIMENTS

The invention is described more fully hereinafter with references to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. It will be understood that for the purposes of this disclosure, "at least one of each" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g. XYZ, XZ, YZ, X). Throughout the drawings and the detailed description, unless otherwise described, the same drawing reference numerals are understood to refer to the same elements, features, and structures. The relative size and depiction of these elements may be exaggerated for clarity, illustration, and convenience.

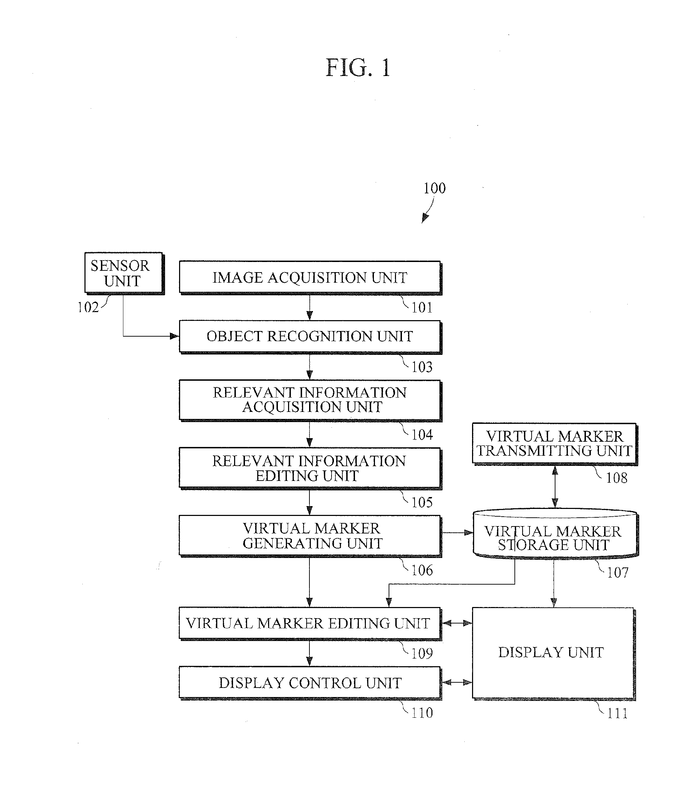

FIG. 1 is a block diagram illustrating an apparatus to provide augmented reality (AR) according to an exemplary embodiment of the invention.

Referring to FIG. 1, an apparatus 100 to provide AR may provide AR by acquiring an image of a surrounding environment and overlaying a virtual image or virtual information onto the acquired image.

In an example, the AR providing apparatus 100 may be applied to a portable terminal, such as a smart phone, which is provided with a camera and a preview screen to display an image captured or photographed by the camera. Similarly, any portable terminal with a display screen and image capturing capability may incorporate the disclosed invention.

As shown in FIG. 1, the AR providing apparatus 100 include an image acquisition unit 101, a sensor unit 102, an object recognition unit 103, a relevant information acquisition unit 104, a relevant information editing unit 104, a virtual marker generating unit 106, a virtual marker storage unit 107, a virtual marker transmitting unit 108, a virtual marker editing unit 109, a display control unit 110 and a display unit 111.

The image acquisition unit 101 acquires an image of an object. For example, the image acquisition unit 101 may be a camera for photographing a surrounding environment or similar devices that has image capturing functionality.

The sensor unit 102 acquires various kinds of information about a surrounding environment and a condition or status of a portable terminal. For example, the sensor unit 102 may include a GPS sensor, a magnetometer, an acceleration sensor and/or a gyroscope sensor. Accordingly, in a markerless-based scheme, an object may be identified even without a marker present in the captured image using the information acquired by the sensor unit 102.

The object recognition unit 103 recognizes an object from the image which is acquired by the image acquisition unit 101. The object recognition unit 103 may recognize an object through a marker-based scheme or a markerless-based scheme. A target object in a marker-based scheme may be identified a marker present in the real world. Alternatively, a target object in a markerless-based scheme may be identified by referring to sensing information of the sensor unit 102. In the case that an object is recognized through a marker-based scheme, the object recognition unit 103 checks a marker that is present in the real world on an image. In the case that an object is recognized through a markerless-based scheme, the object recognition unit 103 checks an object by referring to sensing information of the sensor unit 102, such as GPS information or through an object recognition algorithm. An object recognition method of the object recognition unit 103 may be implemented in various forms according to the purpose of use and application.

The relevant information acquisition unit 104 acquires various kinds of information related to an object that is recognized by the object recognition unit 103 to implement AR. For example, the relevant information acquisition unit 104 may make a request for relevant information by sending object recognition information to a server and receiving the relevant information from the server. In an example, the relevant information may be various types of data which correspond to the object and are used to implement AR on the object. Accordingly, if the object of interest is a book, the relevant information may include a title, author, first printing date, publishing date and publishing company of the book. In another example, if the objects of interest are buildings in a specific geographic area, the relevant information may include a name, address and times of operation for the companies occupying each building.

The relevant information editing unit 105 edits information acquired by the relevant information acquisition unit 104 according to a set of rules. In an example, the rules may be determined by a user or a third party. In an example, multiples of relevant information may be acquired by the relevant information acquisition unit 104, where a user may seek only a selective subset of the acquired information. Accordingly, the user may seek to edit the acquired information to display only the information of interest. In an example, editing of acquired information may include grouping, rearrangement, filtering, or other editing desired by the user. Editing by grouping, may include dividing acquired relevant information according to a standard. Editing by rearrangement may include adjusting the arrangement order of the acquired information. Lastly, editing by filtering may include selecting some information within the acquired information to display or not display.

An example of a user taking a picture of a book with a marker is provided below incorporating the components discussed above. If the book is photographed by the image acquisition unit 101, the marker may be recognized by the object recognition unit 103. Then, the relevant information acquisition unit 104 retrieves relevant information based on the recognized marker. In an example, a title, author, publishing company, first printing date, second printing date and book review may be considered relevant information. Accordingly, the first printing date and the second printing date, both related to dates, may be grouped as a first group and the remainder of the pieces of relevant information may be grouped as a second group by the relevant information editing unit 105. In addition, the relevant information editing unit 105 may also edit the relevant information in the order of the author, the book review of readers, the publishing company, the title, the first printing date and the second printing date based on the interest of a user. Further, the relevant information editing unit 105 may remove the first printing date from the acquired plurality of pieces of relevant information as desired by the user.

The virtual marker generating unit 106 generates a virtual marker based on the relevant information provided by the relevant information editing unit 105. In an example, the relevant information may be provided in an edited form or an unedited form by the relevant information editing unit 105. The virtual marker is a marker that may not exist in the real world but may serve as an electronically provided identifying marker for the benefit of the user. In general, a marker which exists in the real world may have a form that may be recognized by a computer, but an exemplary virtual marker may be generated in a form that may be recognized by a user.

In order for a user to recognize a virtual marker, the virtual marker generating unit 106 generates the virtual marker by mapping the relevant information to a marker element. In an example, marker element may be defined based on a number, a symbol, a icon, a color, or a combination of the number, symbol, icon and color. In reference to the book example provided above, the respective relevant information including the title, the author and the publishing company may be mapped to a unique icon image to generate a virtual marker.

For example, if a user takes a picture of a book, a generated virtual marker may be displayed as an overlapped image on the book on a preview screen. In a conventional marker, a user may fail to intuitively recognize the content of the marker due to the amount information that may be provided, as well as the organization thereof. However, in an example, the virtual marker may be newly generated based on the edited relevant information, so that the user may more readily recognize the content of the virtual marker. As more relevant information may be provided to the user by editing out extraneous information that were not originally sought, a cleaner and more readily recognizable virtual marker may be provided.

In an example, the virtual marker generated by the virtual marker generating unit 106 may be stored in the virtual marker storage unit 107. The virtual marker stored in the virtual marker storage unit 107 may be loaded and displayed on the display unit 111 or shared with another user through the virtual maker transmitting unit 108. For example, the virtual marker transmitting unit 108 may upload the virtual marker to an additional server.

The generated virtual marker or the stored virtual marker may be additionally edited by the virtual marker editing unit 109. In an example, editing of the virtual marker may include grouping, rearrangement, filtering, or other editing desired by the user. Editing by grouping, may include dividing marker elements constituting the virtual marker. Editing by rearrangement may include adjusting the arrangement of the marker elements. Lastly, editing by filtering may include removing a part of the marker elements. For example, if a user touches a virtual maker displayed on the display unit 111, the virtual marker editing unit 109 may sense the touch of the user and edit the virtual marker by grouping, rearrangement, filtering or as desired by the user.

In addition, when displaying the relevant information acquired by the relevant information acquisition unit 104 on the display unit 111, the display control unit 110 may control the display unit 111 such that the relevant information is displayed based on the virtual marker edited by the virtual marker editing unit 109.

As described above, the AR providing apparatus 100 may appropriately edit the acquired information from an object, generate a virtual marker based on the edited information, and display the relevant information based on the virtual marker. In addition, the AR providing apparatus 100 may be further configured to enable a user to edit the generated virtual marker, to additionally filter for more relevant information.

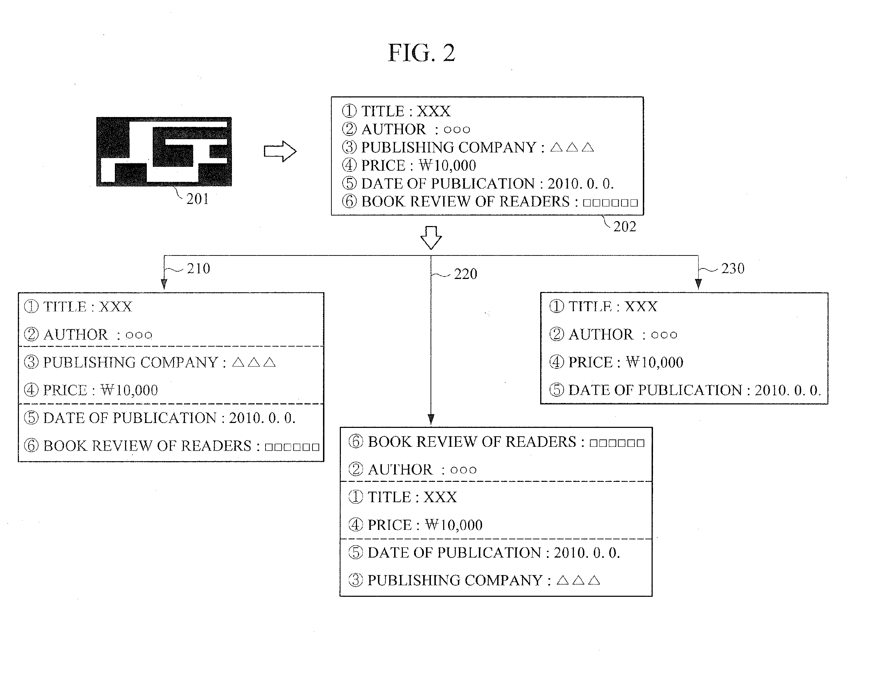

FIG. 2 is a diagram illustrating collected relevant information as well as the editing where an object is recognized through a marker-based scheme according to an exemplary embodiment of the invention.

As shown in FIG. 2, a marker 201 existing on an object in the real world may be recognized through an image. As the marker 201 is recognized, relevant information 202 about the object having the marker 201 is acquired. For example, if a marker 201 belongs to a book, the relevant information 202 may include the title of the book ①, the author ②, the publishing company ③, the price of the book ④, the publishing date ⑤, and the book review of readers ⑥. The acquired relevant information may be edited through grouping 210, rearrangement 220, filtering 230 or a combination of the grouping 210, the rearrangement 220 and the filtering 230. For example, the edits through grouping show the title of the book ① and the author ②grouped as a first group, the publishing company ③ and the price of the book ④grouped as a second group, and the publishing date ⑤ and the book review of readers ⑥grouped as a third group. In addition, the arrangement order of the acquired relevant information may be edited through the rearrangement 220 so that the book review of readers ⑥ has higher priority over author ②. Lastly, edits though filtering mechanism 230 may remove the publishing company ③ and the book review of readers ⑥from the acquired relevant information.

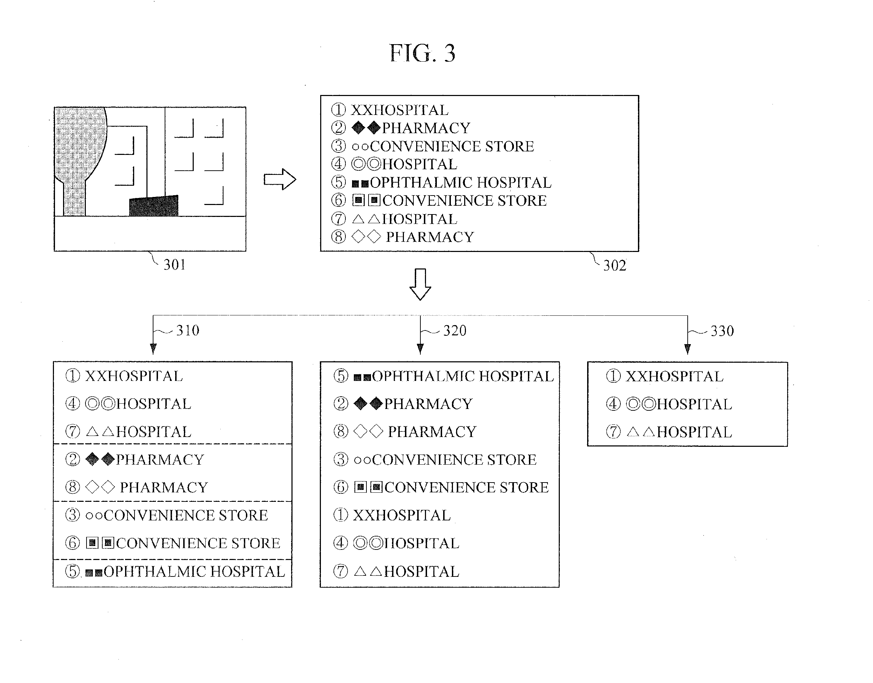

FIG. 3 is a diagram illustrating a set of collected relevant information as well as the editing thereof where a plurality of objects are recognized through a markerless-based scheme according to an exemplary embodiment of the invention.

As shown in FIG. 3, a user may take a picture of a region to produce image 301 having a plurality of buildings without markers. In an example, using the sensor unit 102 of FIG. 1, objects in the image are identified as businesses as shown in component 302 as relevant information. Supplementary information (not pictured) for the identified objects, such as the name, address, and time of operation of the identified businesses in component 302 may be captured. In an example, a maker with the identifier "Jon Doe hospital" may display the name, the address, the contact number and the times of operation of a hospital when the marker is selected to show marker specific information.

Similarly to the relevant information 202 shown in FIG. 2, the relevant information 302 may be edited in grouping 310, rearrangement 320, filtering 330, or a combination of the grouping 310, the rearrangement 320 and the filtering 330. In an example, if the edited result of the relevant information 302 is viewed, the relevant information may be divided through the grouping 310 by the types of business. In addition, the arrangement order of the relevant information may be changed through the rearrangement 320, or the relevant information except for the hospital may be removed through the filtering 330.

The examples shown in FIG. 2 and FIG. 3 are provided for the sake of convenience. The relevant information selected for editing and the method of editing may vary based on configuration or editing rules. Editing rules may be changed at a user's convenience or may be updated automatically, such as upon analyzing the aspects by periods in use of the relevant information.

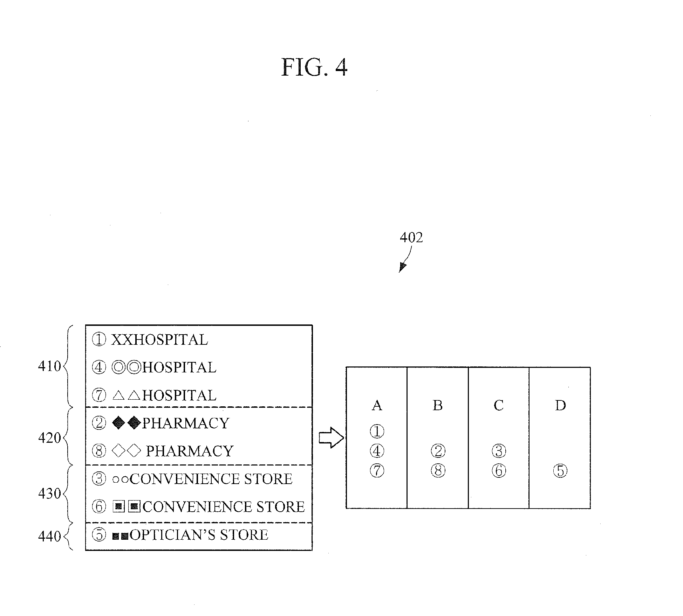

FIG. 4 is a diagram illustrating a virtual marker according to an exemplary embodiment of the invention.

As shown in FIG. 3 and FIG. 4, a virtual marker 402 is generated based on the relevant information 301 edited through the grouping 310. As shown in FIG. 4, the virtual marker 402 includes marker elements A, B, C and D. In an example, each marker element may be defined based on a number, a symbol, an icon, a color, or a combination of the number, symbol, icon and color. For example, the grouping of relevant information 410 related to a hospital is mapped to a marker element A, the grouping of relevant information 420 related to a pharmacy is mapped to a marker element B, the grouping of relevant information 430 related to a convenience store is mapped to a marker element C, and the grouping of relevant information 440 related to an optician's shop is mapped to a marker element D.

In an example, the generated virtual marker 402 may be stored to be shared with another user. In addition, if virtual marker 402 is displayed on a preview screen, the generated virtual marker 402 may be edited through a user's touch operation on a preview screen. For example, referring to FIG. 4, if a user touches a marker element A in the virtual marker 402 displayed on the preview screen and drags the marker element A out of the screen, the marker element A may be removed from the screen. In addition, if a user double touches the marker element A in the virtual marker 402 displayed on the preview screen, relevant information related to a hospital corresponding to the marker element A may be displayed on the preview screen.

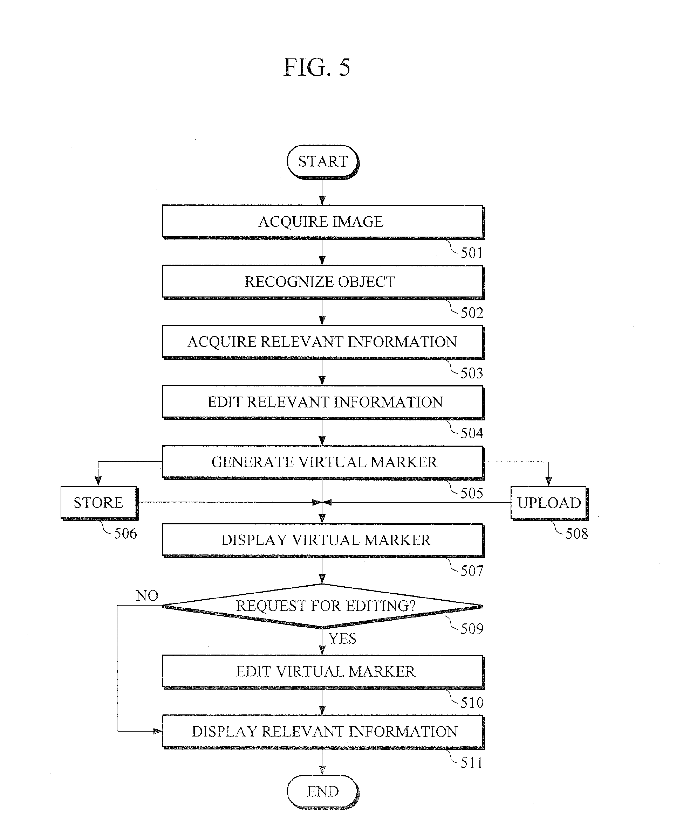

FIG. 5 is a diagram illustrating a method for providing AR according to an exemplary embodiment of the invention. Hereinafter, the example of the AR providing method will be described in detail with reference to FIG. 1 and FIG. 5.

First, an image containing at least one object may be acquired (501). For example, a preview image of the object of interest is obtained by the image acquisition unit 101. Object of interest may be a book, a business within a building, or other entities a user may seek.

The object within the image is recognized (502). For example, the object recognition unit 103 may recognize the object through a marker-based scheme. The object recognition unit 103 may refer to sensing information of the sensor unit 102, such as the GPS information, to recognize the object of interest in a marker.

After the object is recognized, at least two pieces of relevant information about the object may be acquired (503). For example, the relevant information acquisition unit 104 may acquire the at least two pieces of relevant information, such as relevant information 202 and 302 shown in FIG. 2 and FIG. 3, respectively.

After the relevant information is acquired, the acquired relevant information is edited (504). For example, as shown in FIG. 2 and FIG. 3, the relevant information editing unit 105 may edit by a grouping, rearrangement or filtering function on the relevant information according to editing rules. The editing rules may be changed at a user's convenience or may be updated automatically.

After the relevant information is edited, a virtual marker that may be recognized by a user is generated based on the edited relevant information (505). For example, the virtual marker generating unit 105 may generate a virtual marker by mapping the edited relevant information to the marker element that is defined based on an identifying number, a symbol, an icon, a color, or the combination of the number, the symbol, the icon and the color.

After the virtual marker is generated, the generated virtual marker is subject to storing (506), displaying (507) and uploading (508). After that, if a user makes a request for editing on the displayed virtual marker (509), the displayed virtual marker is edited by the request of the user (510). For example, the virtual marker editing unit 109 may perform grouping, rearrangement or filtering on the marker element upon the request by the user.

The relevant information is displayed based on the generated virtual marker or the edited virtual marker (511). In an example, as display control unit 110 performs control over the display unit 111, the display control unit 110 may dictate what relevant information may be displayed on the display unit 111. Accordingly, a marker element that is removed though editing may not be displayed since the display control unit 110 performing control over the display unit 111 allows only the relevant information corresponding to the unremoved marker element to be seen.

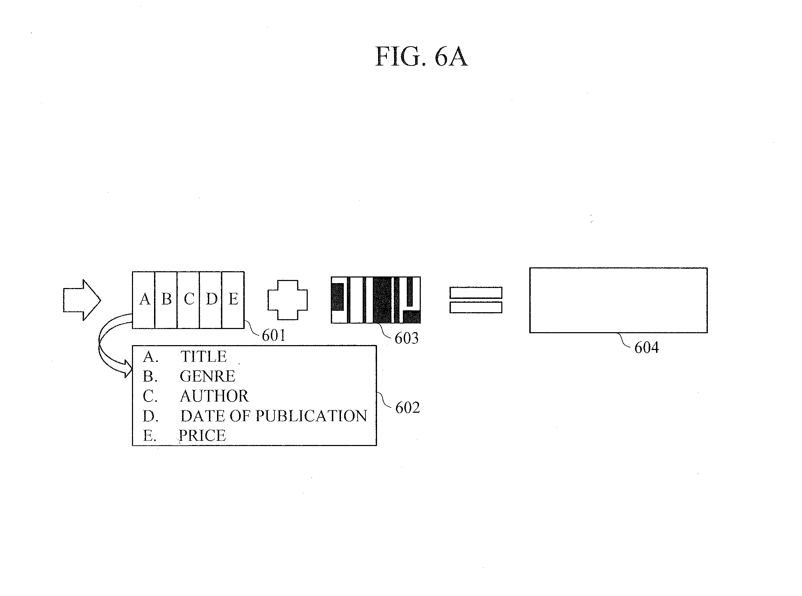

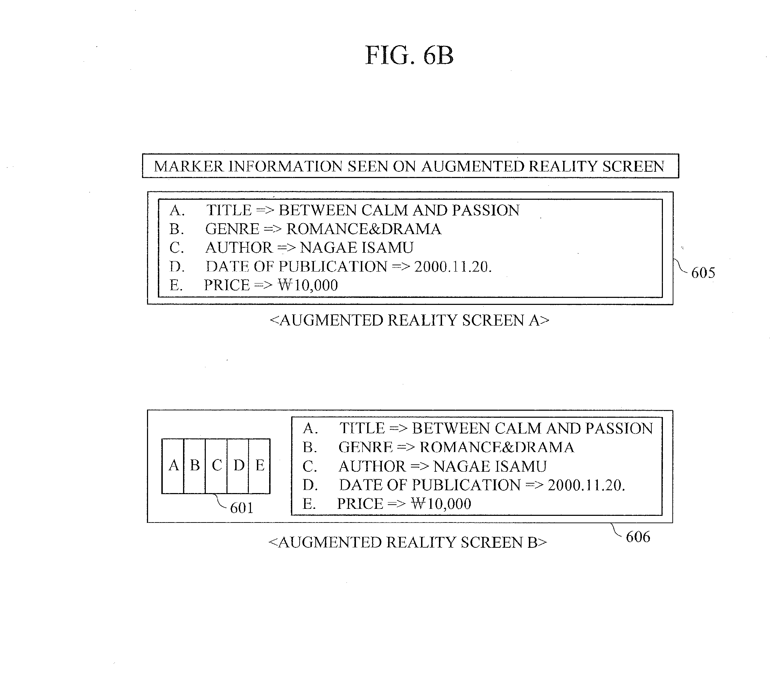

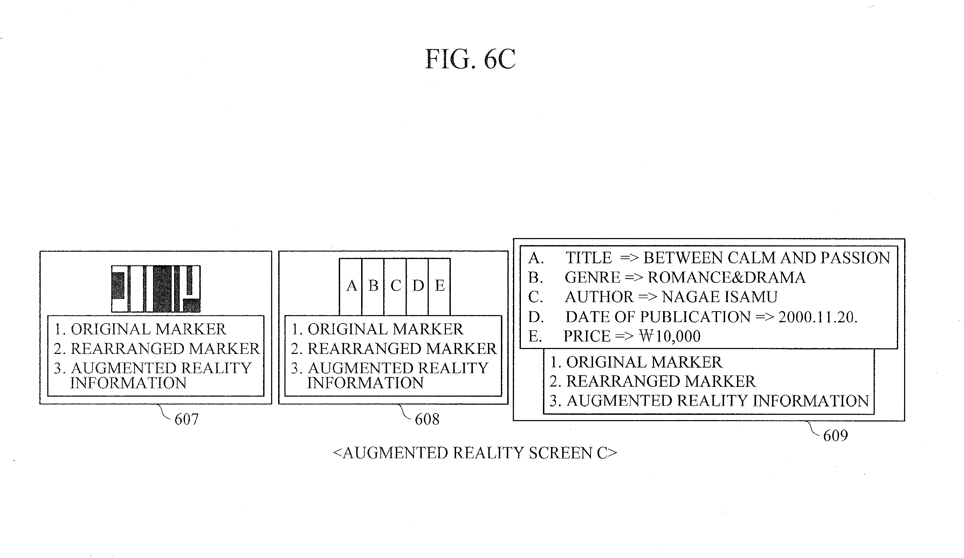

FIG. 6A, FIG. 6B and FIG. 6C are diagrams illustrating a method for displaying a virtual marker according to an exemplary embodiment of the invention.

As shown in FIG. 6A, virtual markers 601 are shown by blocks of A, B, C, D, and E, which correspond to relevant information 602 about an object. In an example, relevant information may pertain to a book such as a title, genre, author, date of publication and price as shown in component 602. A real world marker 603 along with the virtual marker 601 may be displayed on an AR screen 604.

In FIG. 6B, an augmented reality screen A 605 and augmented reality screen B 606 are shown. In FIG. 6C, an augmented reality screen C 607 is also shown. The AR screen A 605 displays only the relevant information. The AR screen B 606 displays the virtual marker 601 and the relevant information. In addition, as shown in AR screens C, an original marker 607, a virtual marker 608, and AR information 609 may be selectively displayed.

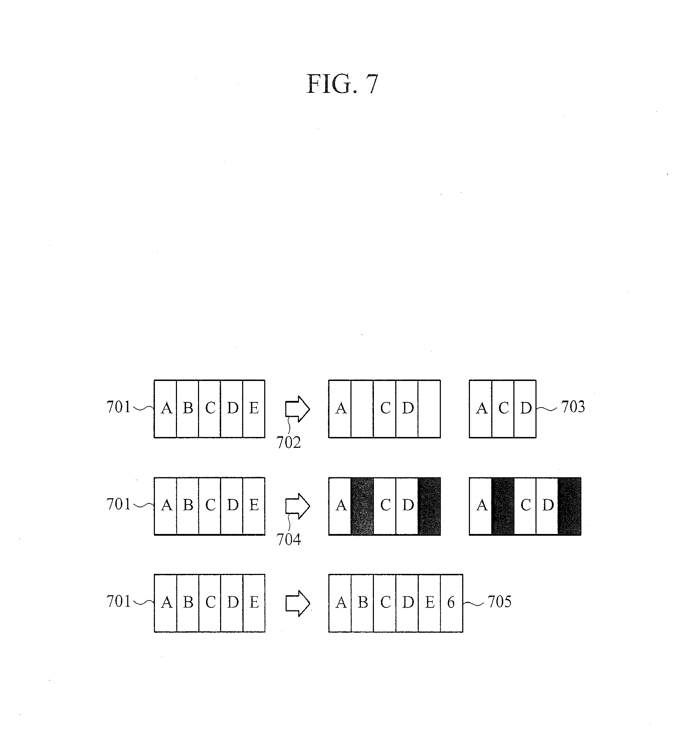

FIG. 7 is a diagram illustrating a method for editing a virtual marker according to an exemplary embodiment of the invention.

As shown in FIG. 7, if a generated virtual marker 701 is displayed on a touch screen, the user may manipulate the touch screen to edit the virtual marker 701. For example, marker elements B and E in the virtual marker 701 are dragged to be removed (702), thereby generating an edited virtual marker 703. In addition, marker elements B and E in the virtual marker 701 may be converted into blocked marker elements (704) so that blocked marker elements will be displayed. Upon the receipt of new relevant information, the received new relevant information may be additionally mapped to a marker element 705.

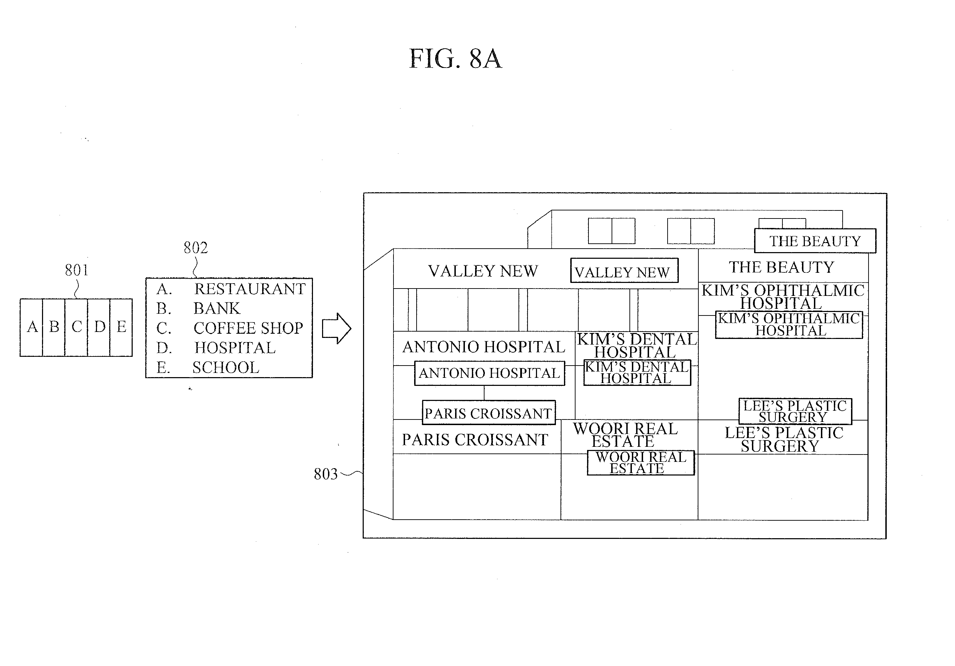

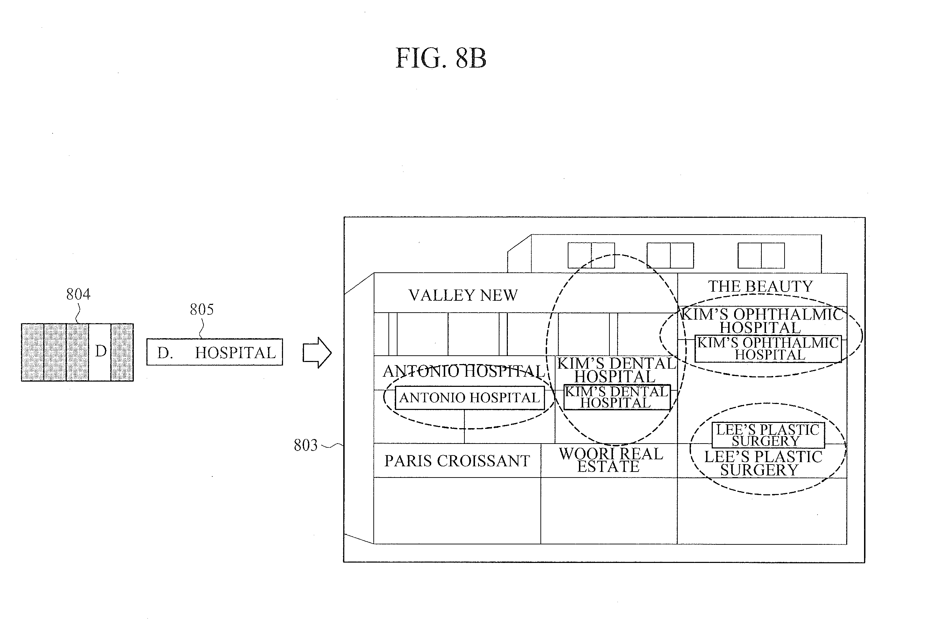

FIG. 8A and FIG. 8B are diagrams illustrating a method for displaying relevant information based on a virtual marker according to an exemplary embodiment of the invention.

As shown in FIG. 8A and FIG. 8B , if a virtual marker 801 is overlapped on the real world displayed on a preview screen 803, relevant information 802 corresponding to the virtual marker 801 may be displayed on the preview screen 803. In an example, as shown in FIG. 8B, the virtual marker 801 may be edited to display no other information than desired information, such as information D related to a hospital. Accordingly, a marker element 804 in the virtual marker 801 which is not related to a hospital may be subject to filtering such that only hospital related information is displayed on the screen 803.

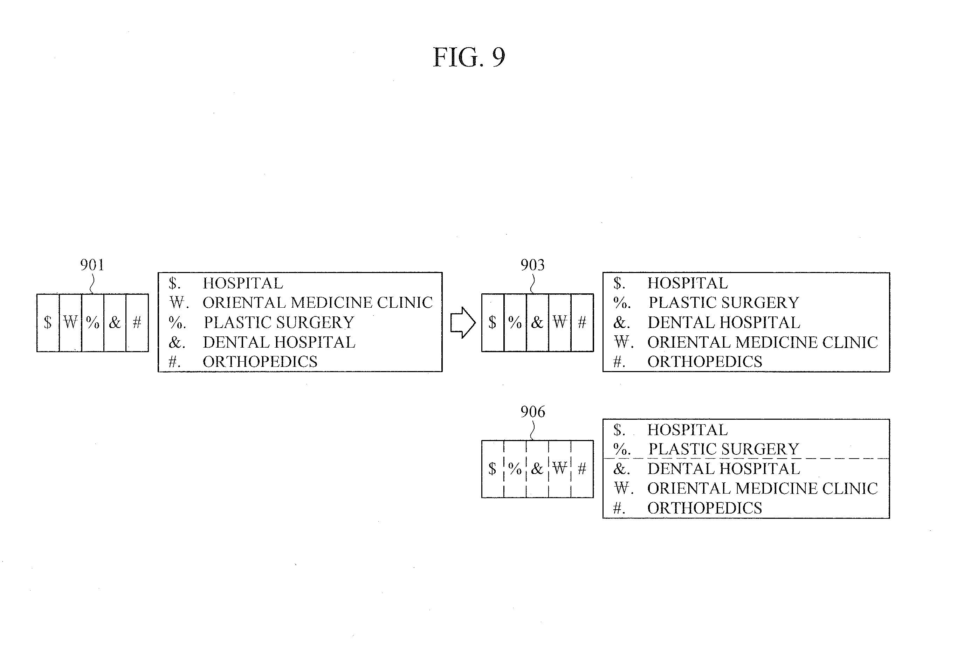

FIG. 9 is a diagram illustrating a method for editing a virtual marker according to an exemplary embodiment of the invention.

As shown in FIG. 9, a user assigns respective marker elements of a virtual marker 901 according to a predetermined priority order and rearranges the marker elements according to the priority order, thereby generating an edited virtual marker 903. Relevant information having the same attribute or marker elements having the same attribute may be formed into a group. For example, marker elements in a virtual marker 906 may be divided into groups by attributes and the boundaries between the groups may be displayed as a dotted line.

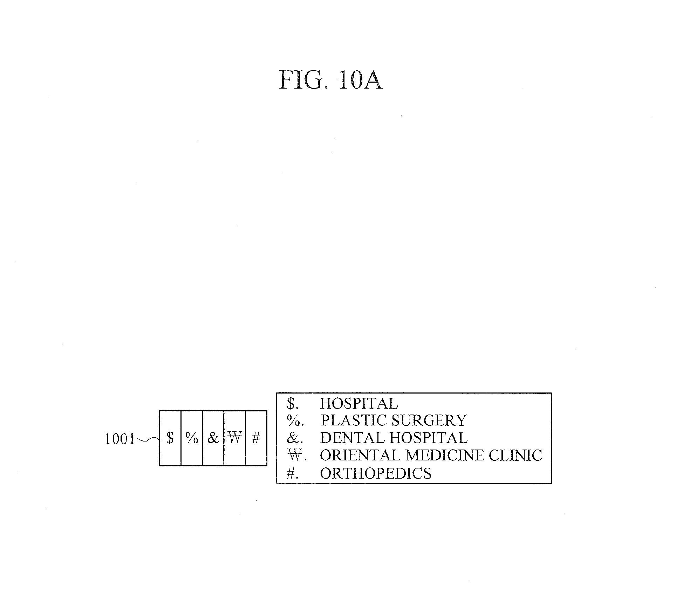

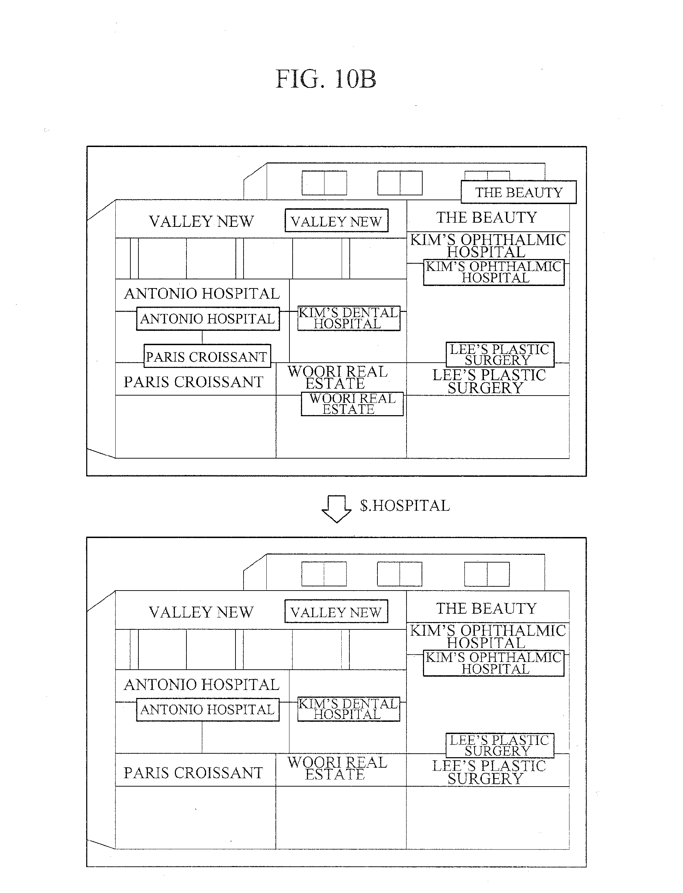

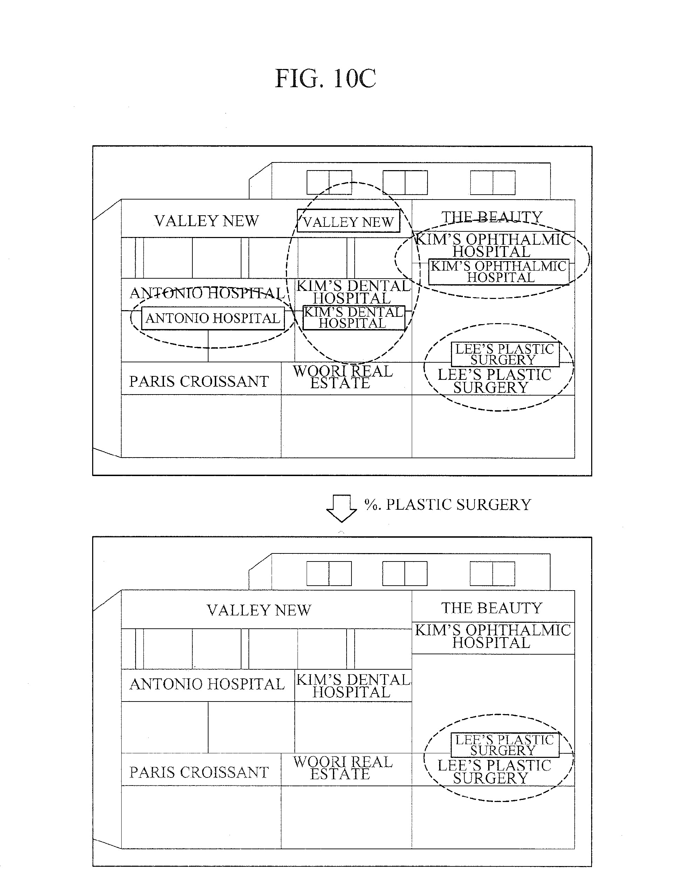

FIG. 10A, FIG. 10B, and FIG. 10C are diagrams illustrating a method for displaying relevant information based on a virtual marker according to an exemplary embodiment of the invention.

As shown in FIG. 10A, FIG. 10B, and FIG. 10C, relevant information corresponding to respective marker elements is displayed based on the edited marker 1001 in which each marker element is assigned a priority order such that the relevant information is arranged according to the priority order assigned to each marker element. For example, as shown in FIG. 10B , relevant information related to a hospital ($) may be displayed based on the order of primary arrangement of the marker elements. Then, relevant information related to plastic surgery (%) may be displayed based on the order of secondary arrangement of the marker elements as shown in FIG. 10C. In this case, marker elements corresponding to the hospital ($) and the plastic surgery (%) may be divided into groups having the same attribute through the editing process as described in FIG. 9.

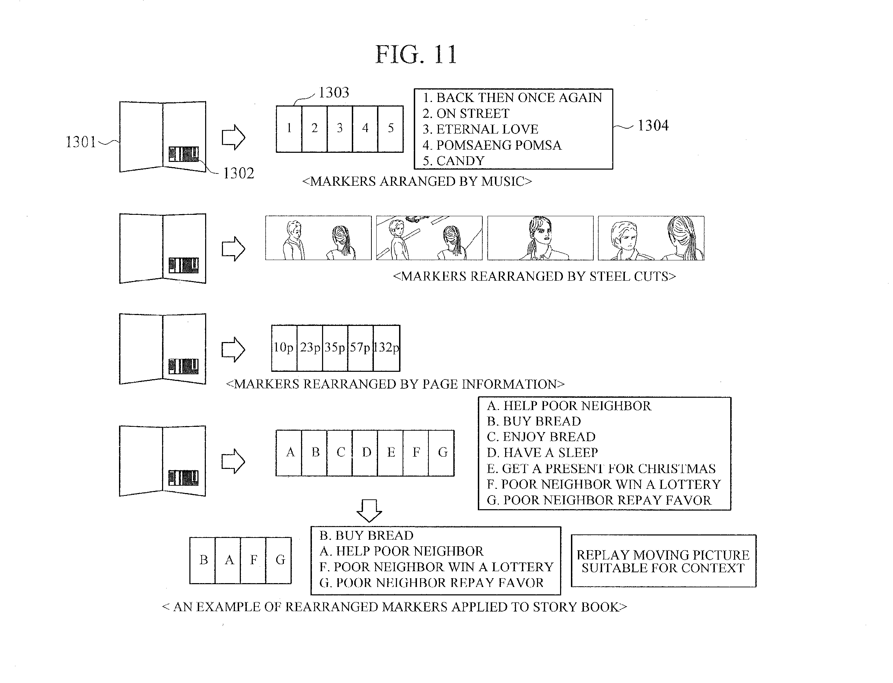

FIG. 11 is a diagram illustrating an AR book to which virtual marker is applied according to an exemplary embodiment of the invention.

As shown in FIG. 11, a virtual marker 1303 corresponds to a real marker 1302 of an AR book 1301. The virtual marker 1303 is generated based on relevant information 1304 which is acquired through the real marker 1302 and then edited. If the virtual marker 1303 is generated, the user obtains various uses of contents of the AR book 1301 by use of the virtual marker 1303. For example where the AR book 1301 has a music replay list, the virtual marker 1303 may be generated based on the music replay list. In addition, if the virtual marker 1303 corresponds to respective scene cuts or respective pages, an unnecessary part of the scene cuts or pages may be skipped or used as a bookmark. Further, if the virtual marker 1303 corresponds to various scenes of moving pictures or pages within a story book, a user may edit the content of the AR book 1301 according to the user's preference by editing the virtual marker 1303.

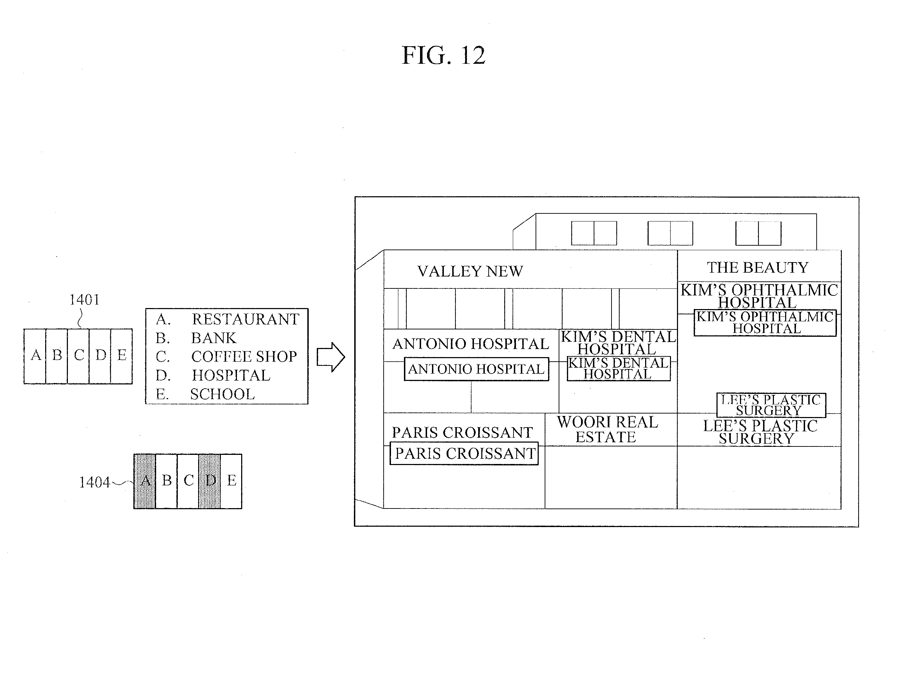

FIG. 12 is a diagram illustrating activation of a virtual marker according to an exemplary embodiment of the invention.

As shown in FIG. 12, a virtual marker 1401 is loaded on a preview screen through a portable terminal having a camera and a user sees a predetermined part of the real world through the portable terminal. In an example, if inactivation display 1404 is implemented in a manner that marker elements A and D are selected to be shown on the preview screen, the marker elements A and D are displayed to be darker among all marker elements as shown in the activation display 1404, and the corresponding objects in the preview may be displayed on the screen.

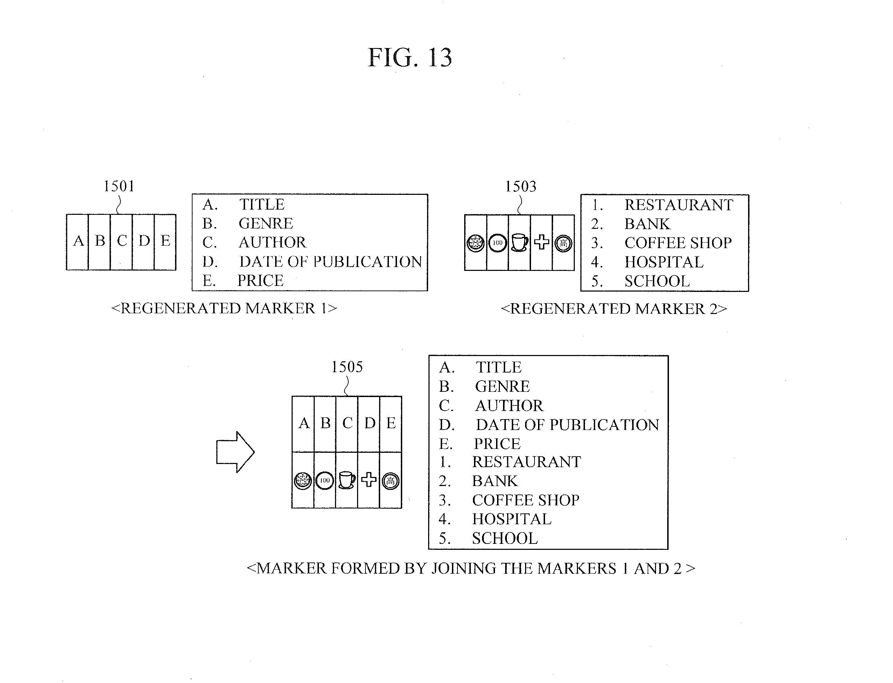

FIG. 13 is a diagram illustrating a method for editing a virtual marker.

In FIG. 13, a regenerated marker 1 (1501) and regenerated marker 2 (1503) are generated using the method disclosed above. As shown in FIG. 13, a first virtual marker 1501 and a second virtual marker 1503 may be combined to generate a new virtual marker 1505. When a virtual marker for more information is desired, the combining of virtual markers having the desired information may be more convenient than generating a new virtual marker to generate and manage virtual markers.

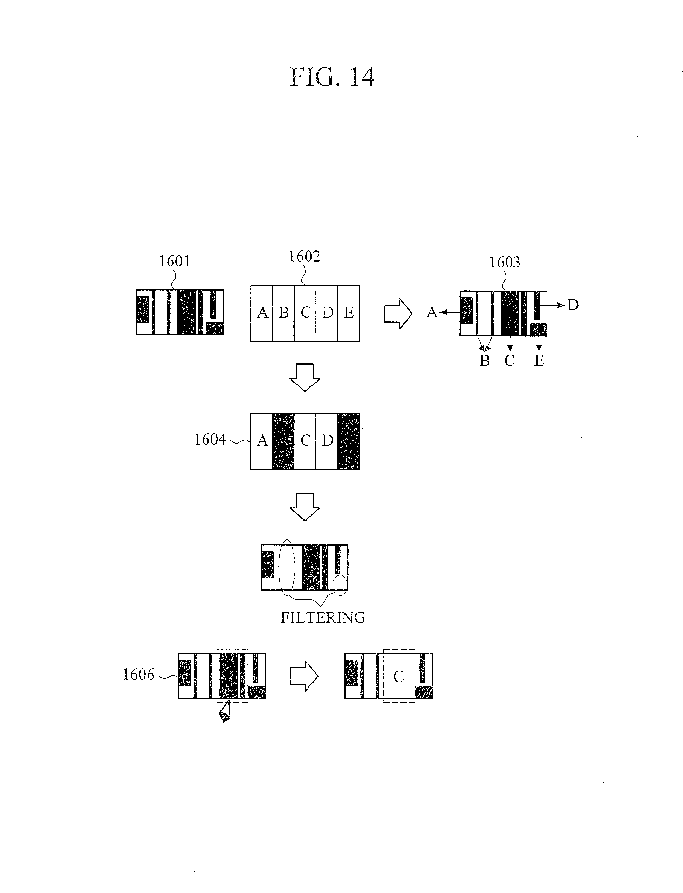

FIG. 14 is a diagram illustrating a method for displaying a virtual marker according to an exemplary embodiment of the invention.

As shown in FIG. 14, a virtual marker 1602 is converted such that the virtual marker 1602 matches a real world marker 1601 in one-to-one correspondence. More specifically, each part of the real world marker 1601, A, B, C, D, and E corresponds to virtual marker elements A, B, C, D, and E as shown in 1603. In an example, a graphic effect may be provided such that the editing of the virtual marker 1602 results in the editing of a part of the real world marker 1601 corresponding to the marker elements of the virtual marker 1602. Accordingly, if a marker element of the virtual marker 1604 is filtered out, the virtual marker 1604 may be displayed such that a part of the real world marker 1601 corresponding to the predetermined marker element is also not displayed. Similarly, if a part of a pattern of the real world marker 1601 in the matched virtual marker 1606 is pointed at, a marker element of the virtual marker 1606 corresponding to the pointed part may be displayed.

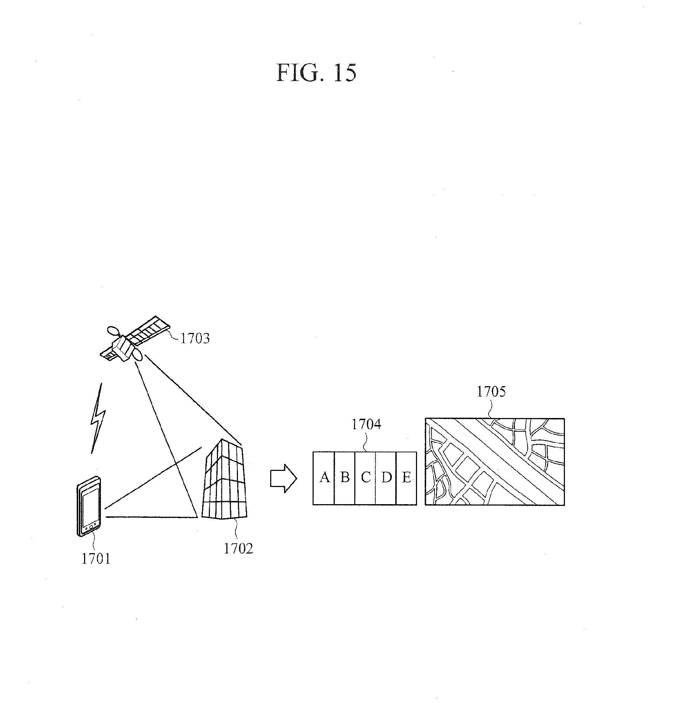

FIG. 15 is a diagram illustrating a method of storing and managing a virtual marker according to an exemplary embodiment of the invention.

As shown in FIG. 15, an object 1702 is recognized through an electronic device 1701 adopting a camera and a virtual marker 1704 corresponding to a predetermined scheme or rules determined by a user. In an example, position information 1705 of the target object 1702 obtained using a GPS satellite system 1703 is stored together with the virtual marker 1704 such that position information 1705 is included in the virtual marker 1704. Accordingly, if a user browses virtual markers at a location corresponding to the position, the virtual marker 1704 which is generated corresponding to the position may be found. In addition, for a user who is granted user authentication, the AR providing apparatus may automatically provide a recommended virtual marker depending on the gender, age and preference of the user that is obtained through the user's information received from a mobile telecommunication company or through a similar informational source.

The disclosure can also be embodied as computer readable codes on a computer readable recording medium. The computer readable recording medium may be any data storage device that can store data which can be thereafter read by a computer system.

Examples of the computer readable recording medium may include read-only memory (ROM), random-access memory (RAM), CD-ROMs, magnetic tapes, floppy disks, optical data storage devices, and carrier waves such as data transmission through the Internet. The computer readable recording medium can also be distributed over network coupled computer systems so that the computer readable code is stored and executed in a distributed fashion.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. An apparatus to provide augmented reality (AR), comprising:
a relevant information acquisition unit to acquire relevant information corresponding to an object recognized in an image;
a relevant information editing unit to edit the relevant information; and
a virtual marker generating unit to generate a virtual marker based on the edited relevant information by mapping the edited relevant information to a marker element, which is defined based on at least one of a number, a symbol, an icon, and a color.

2. The apparatus of claim 1, wherein the relevant information editing unit edits the relevant information by grouping the relevant information, adjusting an arrangement order of the relevant information or filtering a part of the relevant information.

3. The apparatus of claim 1 or 2, further comprising a virtual marker storage unit to store the generated virtual marker, or/and further comprising a virtual marker transmitting unit to upload the generated virtual marker to an external server, or/and further comprising a virtual marker editing unit to edit the generated virtual marker.

4. The apparatus of claim 3, wherein the virtual marker editing unit edits the generated virtual marker by grouping marker elements of the virtual marker, adjusting an arrangement of the marker elements, or removing a part of the marker elements.

5. The apparatus of claim 3 or 4, further comprising:
a display unit to display the generated virtual marker or the edited virtual marker and the relevant information; and
a display control unit to control the display unit such that the relevant information is displayed based on the edited virtual marker.

6. The apparatus of one of claims 1 to 5, comprising:
an image acquisition unit to obtain an image including an object of interest;
an object recognition unit to recognize the object of interest from the image;
the relevant information acquisition unit to acquire a first piece and a second piece of relevant information corresponding to the object of interest;
the relevant information editing unit to edit the first piece and the second piece of acquired relevant information;
the virtual marker generating unit to generate a virtual marker based on the edited relevant information;
a display control unit to select the virtual markers selected for viewing by a user, and to exclude the virtual markers not selected for viewing; and
a display unit to display the virtual markers selected for viewing.

7. A method for providing augmented reality (AR), comprising:
acquiring relevant information corresponding to an object recognized in an image;
editing the relevant information; and
generating a virtual marker based on the edited relevant information by mapping the edited relevant information to a marker element, which is defined based on at least one of a number, a symbol, an icon, and a color.

8. The method of claim 7, further comprising displaying the generated virtual marker.

9. The method of claim 7 or 8, wherein editing the relevant information comprises grouping the relevant information according to a rule, or/and wherein editing the relevant information comprises adjusting an arrangement order of the relevant information according to a rule.

10. The method of one of claims 7 to 9, wherein editing the relevant information comprises removing a part of the relevant information according to a rule.

11. The method of one of claims 7 to 10, further comprising uploading the generated virtual marker to an external server, or/and further comprising editing the generated virtual marker.

12. The method of claim 11, wherein editing the generated virtual marker comprises grouping marker elements of the virtual marker.

13. The method of claim 11 or 12, wherein editing the generated virtual marker comprises adjusting an arrangement of marker elements of the virtual marker.

14. The method of one of claims 11 to 13, wherein editing the generated virtual marker comprises removing a part of the marker elements.

15. The method of claim 14, further comprising displaying the relevant information based on the edited virtual marker.
